# EUROPEAN PATENT SPECIFICATION

(11) **EP 3 690 147 B1**
(45) Date of publication and mention of the grant of the patent: **08.03.2023**
(21) Application number: 18862477.9
(22) Date of filing: 25.09.2018
(51) Int. Cl.: E02F 9/20, B60W 10/26, B60W 20/13, H01M 10/42, H01M 10/44, H01M 10/48

(54) **CONSTRUCTION MACHINE**
BAUMASCHINE
MACHINE DE CONSTRUCTION

(30) Priority: 29.09.2017 JP 2017191537
(43) Date of publication of application: 05.08.2020
(73) Proprietor: Hitachi Construction Machinery Co., Ltd., Tokyo 110-0015 (JP)
(72) Inventor: SHIBATA, Kouichi, Tsuchiura-shi Ibaraki 300-0013 (JP); OTA, Yasunori, Tsuchiura-shi Ibaraki 300-0013 (JP); TAKIGAWA, Yoshiyuki, Tsuchiura-shi Ibaraki 300-0013 (JP); AIZAWA, Taiki, Tsuchiura-shi Ibaraki 300-0013 (JP)
(74) Representative: MERH-IP Matias Erny Reichl Hoffmann Patentanwälte PartG mbB
(86) International application number: PCT/JP2018/035527
(87) International publication number: WO 2019/065657

(56) References cited:
- JP-A- 2012 237 161
- JP-A- 2013 074 764
- JP-A- 2017 172 462
- JP-B2- 5 978 606
- KR-A- 20130 087 661

## Description

### Technical Field

The present invention relates to a construction machine.

### Background Art

Automatic stop control has a fuel consumption reducing function for construction machines and automatically stops an engine while the construction machine is not in operation. The automatic stop control stops the engine regardless of an operator's intention, and thus, the operator often fails to recognize that the engine is stopped with power continuously supplied to an electric or electronic facility. Thus, a capacitor is discharged for a long time and brought into an over discharge state (that is, a battery depletion state), and may be degraded.

A technique for suppressing degradation of the capacitor related to the automatic stop control is described in, for example, Patent Document 1. Patent Document 1 discloses a technique including an engine started/stopped on the basis of operation of a switch and serving as a power source, engine control means performing automatic stop control to automatically stop the engine when a preset automatic stop condition is established, a capacitor serving as a power source for an electric or electronic facility including the engine control means, power source control means controlling power supply from the capacitor to the electric or electronic facility and interruption of the power supply, and restart command means transmitting an engine restart command to the engine control means via a path different from a path for the engine switch, the technique performing power-off control including determining whether or not the engine restart command from the restart command means has been provided to the engine control means within a preset window time after automatic stop of the engine under the automatic stop control, and restarting the engine by the engine control means when the engine restart instruction has been provided within the window time, while automatically stopping, by the power source control means, power supply from the capacitor to the electric or electronic facility when no engine restart command has been provided within the window time. Patent Document 2 discloses a power control method of construction equipment which controls a construction equipment with three operation modes of A, B, C. The A operation mode stops the operation of an engine when a control signal caused by the control of a driver is not generated for predetermined time. When the control signal is not generated for the predetermined time, a B operation mode blocks operation power supplied to auxiliary electrical equipment in which stand-by power is unnecessary. In the C operation mode performs both of the A operation mode and the B operation mode when the control signal is not generated for the predetermined time.

### Prior Art Document

### Patent Document

Patent Document 1: Japanese Patent No. 5978606
Patent Document 2: KR 2013 0087661 A

### Summary of the Invention

### Problem to be Solved by the Invention

In the above-described related art, the power-off control is performed in which the preset restart window time is defined after the automatic stop of the engine and in which, after the elapse of the window time, the power supply from the capacitor to the electric or electronic facility is automatically stopped. However, the capacitor is charged only by a generator connected to the engine only while the engine is in operation, and thus, battery depletion resulting from the automatic stop of the engine, that is, degradation of the capacitor, may not be suppressed depending on a charge state of the capacitor varying according to an operating state of the engine. Additionally, for a power source supplying power to the electric or electronic facility, a lead battery is often used as the capacitor, and it is difficult to manage a charge amount of the lead battery simply by monitoring voltage compared to a charge amount of a lithium ion battery. Therefore, it is difficult to suppress degradation of the lead battery resulting from the automatic stop of the engine simply by monitoring voltage of the lead battery.

In view of the foregoing, an object of the present invention is to provide a construction machine capable of more reliably suppressing degradation of the capacitor under the automatic stop control of the engine.

### Means for Solving the Problem

The problem is solved in accordance with the appended claims. In particular, is a construction machine including an engine, a generator driven by the engine, a capacitor storing power generated by the generator, an electric or electronic facility driven or controlled by power supplied from the capacitor, and a controller performing automatic stop control to stop the engine in a case where a preset automatic stop condition is satisfied, in which the controller controlling power supplied from the capacitor to the electric or electronic facility, estimating a charge amount by which the capacitor is charged by the generator while the engine is in operation, estimating an electric discharge amount corresponding to power supplied from the capacitor to the electric or electronic facility while the engine is stopped under the automatic stop control, and stopping supply of power from the capacitor to the electric or electronic facility in a case where the engine is stopped under the automatic stop control and the electric discharge amount is determined to be larger than the charge amount.

### Advantage of the Invention

According to the present invention, degradation of the capacitor can be more reliably suppressed while the engine is under the automatic stop control.

### Brief Description of the Drawings

FIG. 1 is a side view schematically illustrating appearance of a hybrid hydraulic excavator that is an example of a construction machine.
FIG. 2 is a diagram schematically illustrating an electric drive system and a hydraulic drive system extracted along with associated components.
FIG. 3 is a functional block diagram schematically illustrating processing functions of a main controller.
FIG. 4 is a flowchart illustrating assist power generation motor normal-start control processing executed by an assist power generation motor control section.
FIG. 5 is a flowchart illustrating assist power generation motor engine automatic-stop and restart control processing.
FIG. 6 is a flowchart illustrating initial-operation determination processing executed by an initial-operation determination processing section.
FIG. 7 is a flowchart illustrating an engine automatic-stop processing executed by an automatic-stop processing section.
FIG. 8 is a flowchart illustrating power source control processing for an electric facility executed by a power source control processing section for the electric facility.
FIG. 9 is a diagram illustrating an example of temporal changes in a charge and discharge counter along with temporal changes in other statuses including a machine body status.

### Modes for Carrying Out the Invention

Embodiments of the present invention will be described below with reference to the drawings. Note that, in the present embodiment, as an example of a construction machine, a hybrid hydraulic excavator will be described but that such a limitation is not intended and the present invention is applicable to construction machines other than the hybrid type as long as the construction machine allows power to be supplied from a capacitor to an electric or electronic facility while an engine is stopped under automatic stop control.

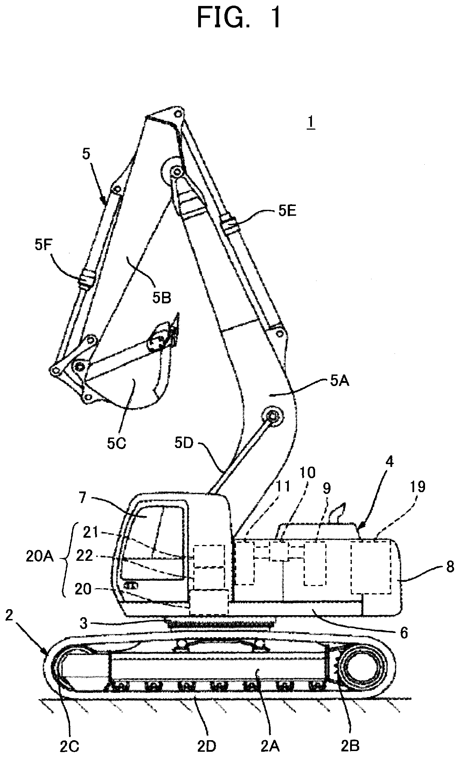

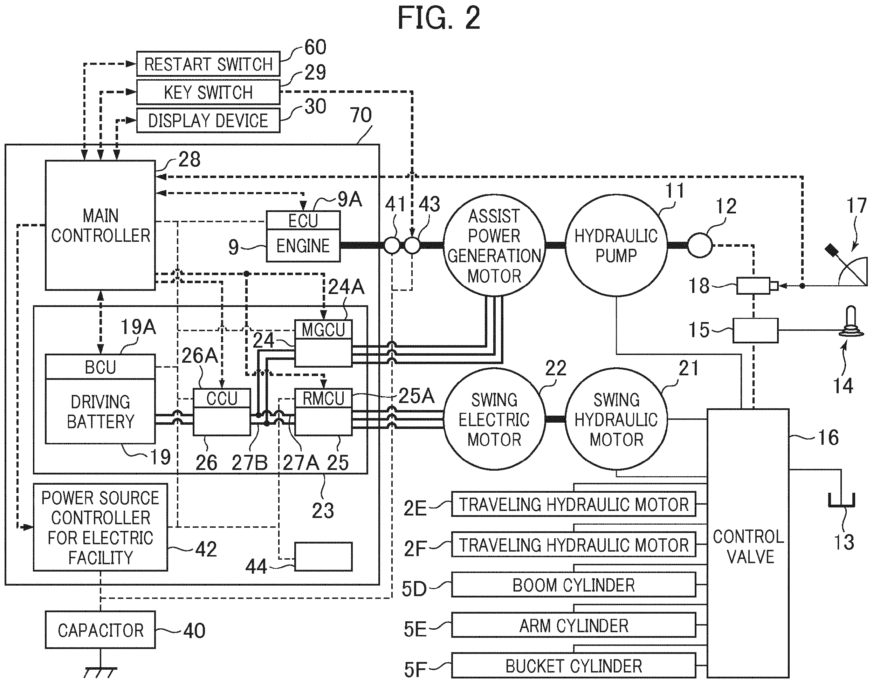

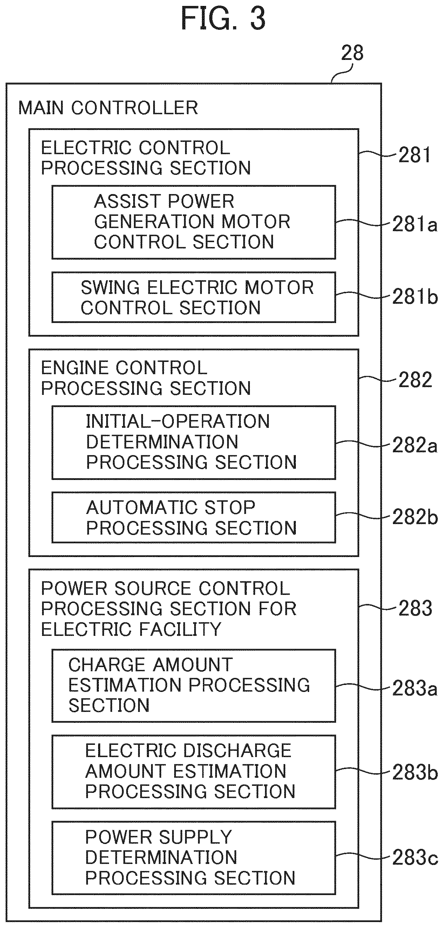

FIG. 1 is a side view schematically illustrating appearance of a hybrid hydraulic excavator that is an example of a construction machine according to the present embodiment, and FIG. 2 is a diagram schematically illustrating an electric drive system and a hydraulic drive system along with associated components. Additionally, FIG. 3 is a functional block diagram schematically illustrating processing functions of a main controller.

In FIG. 1 and FIG. 2, a hybrid hydraulic excavator 1 (hereinafter simply referred to as the hydraulic excavator) includes a lower travel structure 2 of a self-propelled crawler type, a swing bearing device 3 provided on the lower travel structure 2, an upper swing structure 4 mounted on the lower travel structure 2 via the swing bearing device 3 and forming a machine body (base) along with the lower travel structure 2, and a work device 5 attached to a front side of the upper swing structure 4 such that the work device 5 can be luffed, the word device 5 performing sediment excavation work and the like.

The lower travel structure 2 includes a track frame 2A, drive wheels 2B provided at both lateral ends of a track frame 2A on one end side of the track frame 2A in a front-back direction, idler wheels 2C provided at both lateral ends of the track frame 2A on the other end side of the track frame 2A in the front-back direction, crawlers 2D wound around the drive wheels 2B and the idler wheels 2C (only the left crawler is illustrated for both ends in the front-back direction). The left and right drive wheels 2B are rotationally driven by a left traveling hydraulic motor 2E and a right traveling hydraulic motor 2F (see FIG. 2) serving as hydraulic actuators. The swing bearing device 3 is mounted above a central portion of the track frame 2A.

The upper swing structure 4 includes a swing frame 6 forming a support structure. The swing bearing device 3 is mounted on a lower surface side of the swing frame 6, and via the swing bearing device 3, the swing frame 6 is swingably mounted on the lower travel structure 2. A cab 7, a counterweight 8, an engine 9, an assist power generation motor 10, a hydraulic pump 11, a driving battery 19, a swing device 20A, and the like are provided on the swing frame 6.

The work device 5 includes a boom 5A including a base end attached to a front side of the swing frame 6 such that the boom 5A can be luffed, an arm 5B attached to one end of the boom 5A opposite to the base end such that the arm 5B can be luffed, a bucket 5C pivotally attached to the other end of the arm 5B, and a boom cylinder 5D, an arm cylinder 5E, and a bucket cylinder 5F including hydraulic cylinders (hydraulic actuators) driving the boom 5A, the arm 5B, and the bucket 5C.

The cab 7 is provided on a left front side of the swing frame 6, and a driver seat (not illustrated) in which the operator sits is provided in the cab 7. Besides an operation device 14, a key switch 29, a display device 30, a restart switch 60, and the like are disposed around the driver's seat; the key switch 29, the display device 30, the restart switch 60, and the like transmit and receive signals to and from the main controller (controller) 28 described below.

The counterweight 8 is attached to a rear end of the swing frame 6 and configured to balance with the weight of the work device 5 disposed on the front side of the swing frame 6.

The engine 9 is disposed between the cab 7 and the counterweight 8 on the swing frame 6. The engine 9 is configured using, for example, a diesel engine. The engine 9 is horizontally mounted in the upper swing structure 4 and extending in a lateral direction and serves as an internal combustion engine for the hybrid hydraulic excavator 1. In addition to the assist power generation motor 10 and the hydraulic pump 11, an alternator 41 and starter 43 are mechanically connected to an output side of the engine 9.

The engine 9 is provided with an engine control unit 9A (hereinafter referred to as the ECU 9A) controlling operations of the engine 9. A position signal indicative of the position of the key switch 29 (ON position or OFF position) is input to the main controller 28, and the main controller 28 outputs a control signal to the ECU 9A on the basis of the position signal. In a case where the key switch 29 is in an operative position (in other words, the ON position) and the engine 9 is in operation, the ECU 9A controls a feed amount of fuel fed to a fuel injection device (not illustrated) of the engine 9 on the basis of a control signal output from the main controller 28 to variably control an injection amount (fuel injection amount) of fuel injected into cylinders (not illustrated). Thus, the engine 9 is operated at an engine speed corresponding to a driving operation by the operator, an operating state of the machine, and the like. Additionally, in a case where a stop operation is performed using the key switch 29 (in other words, the key switch 29 is operated to the OFF position), the ECU 9A stops fuel injection from the fuel injection device in accordance with a command from the main controller 28 to stop the engine 9.

The assist power generation motor 10 is mechanically connected between the engine 9 and the hydraulic pump 11. The assist power generation motor 10 is, for example, permanent magnet-type synchronous motor and generates power by being rotationally driven by the engine 9 and assists in driving the engine 9 by being supplied with power. That is, the assist power generation motor 10 includes a function (generator function) to generate power by being rotationally driven by the engine 9 and a function (electric motor function) to assist in driving the engine 9 on the basis of supplied power.

The alternator 41 is, for example, a permanent magnet-type generator and generates power by being driven by the engine 9, and stores, in the capacitor 40, power for driving an electric or electronic facility 70 described below and discharges (supplies) the power.

The starter 43 is, for example, a permanent magnet-type electric motor driving an output shaft of the engine 9 to start the engine 9 in a case where the key switch 29 operated to the ON position is further operated to a start position. The starter 43 is driven by power supplied from the capacitor 40 on the basis of a control signal from the key switch 29. The key switch 29 is configured to perform a momentary operation for the start position and automatically returns to the ON position in a case where the operator stops the operation to the start position.

The hydraulic pump 11 is disposed between the assist power generation motor 10 and a pilot pump 12, and is mechanically connected to the engine 9 via the assist power generation motor 10. The hydraulic pump 11 forms a hydraulic source along with the pilot pump 12 and an hydraulic working fluid tank 13. The hydraulic pump 11 is any of various hydraulic pumps, for example, a swash plate type, an inclined axis type, or a radial piston type, and is driven by the engine 9 and the assist power generation motor 10. The hydraulic pump 11 operates as a power source for driving the traveling hydraulic motors 2E and 2F, the cylinders 5D to 5F, and a swing hydraulic motor 21, and the like, and raises the pressure of hydraulic fluid in the hydraulic working fluid tank 13 and delivers the resultant hydraulic fluid to a control valve 16.

The pilot pump 12 is mechanically connected to the engine 9 via the assist power generation motor 10, along with the hydraulic pump 11. The hydraulic pressure (pilot pressure) of the hydraulic fluid delivered from the pilot pump 12 is fed to the operation device 14, and the operation device 14 is operated to generate an operation signal, which is then supplied to the control valve 16.

The operation device 14 includes a traveling operation lever or pedal or a work operation lever disposed in the cab 7 (none of the levers and the pedal are illustrated). Additionally, the operation device 14 includes a flow control valve 15. The flow control valve 15 generates an operation signal from the pilot pressure delivered from the pilot pump 12 according to an operation amount of the operation device 14, and supplies the operation signal to the control valve 16.

The control valve 16 is provided on the swing frame 6, and includes a plurality of directional control valves controlling the flow rate and direction of the hydraulic fluid fed from the hydraulic pump 11 to the hydraulic motors 2E, 2F, and 21 and the cylinders 5D to 5F. The plurality of direction control valves of the control valve 16 are each driven by the operation signal (pilot pressure) from the operation device 14. The hydraulic fluid fed to the control valve 16 from the hydraulic pump 11 is appropriately distributed to the hydraulic motors 2E, 2F, and 21 and the cylinders 5D to 5F to drive (rotate, extend, or contract) the hydraulic motors 2E, 2F, and 21 and the cylinder 5D to 5F.

A gate lock lever 17 forms a lock device that sets whether or not to enable an operation of the hydraulic excavator 1 and is disposed in the cab 7. The gate lock lever 17 includes a pilot cut valve 18. The pilot cut valve 18 switches between communication and interruption of the pilot pressure fed from the pilot pump 12 to the flow control valve 15 to switch between activation and inactivation of operation signals transmitted from the operation device 14 to the directional control valves of the control valve 16 respectively corresponding to the hydraulic motors 2E, 2F, and 21, and the cylinders 5D to 5F. For example, moving the gate lock lever 17 to a locked position (up position) provides a gate lock signal to the pilot cut valve 18 to interrupt the hydraulic fluid supplied from the pilot pump 12 to the flow control valve 15, disabling the operation, by the operation device 14, of the hydraulic motors 2E, 2F, and 21 and the cylinders 5D to 5F. Moving the gate lock lever 17 to an unlocked position (down position) provides a gate lock signal to the pilot cut valve 18 to communicate the hydraulic fluid fed from the pilot pump 12 to the flow control valve 15, enabling the operation, by the operation device 14, of the hydraulic motors 2E, 2F, and 21 and the cylinders 5D to 5F. Furthermore, moving the gate lock lever 17 to the unlocked position activates a starter cut relay (not illustrated) to interrupt power supply to the assist power generation motor 10 functioning as a starter in conjunction with the starter 43, preventing the engine 9 from being started. The gate lock signal, which is indicative of the position of the gate lock lever 17, is also input to the main controller 28 described below. Note that the lock device is not limited to a lever type such as the gate lock lever 17 that pivots in the up-down direction but may be configured using, for example, any of various switches and pedals.

The swing device 20A is provided on the swing frame 6 of the upper swing structure 4, and includes a speed reducer 20, the swing hydraulic motor 21, and a swing electric motor 22. The swing device 20A is what is called a hybrid swing device in which the swing hydraulic motor 21 and the swing electric motor 22 cooperate with each other in swinging and driving the upper swing structure 4. Rotation forces of the swing hydraulic motor 21 and the swing electric motor 22 are transmitted to the swing bearing device 3 via the speed reducer 20 to swing the upper swing structure 4 with respect to the lower travel structure 2.

The swing electric motor 22 is attached to an upper side of the speed reducer 20 along with the swing hydraulic motor 21. The swing electric motor 22 is, for example, a permanent magnet-type synchronous motor and assists, by being supplied with power, swinging and driving of the upper swing structure 4 performed by the swing hydraulic motor 21. Additionally, the swing electric motor 22 converts, into electric energy, energy resulting from deceleration of swinging of the upper swing structure 4 (power generation). That is, the swing electric motor 22 includes the function of an electric motor (swing assist function) to assist the swing hydraulic motor 21 in swinging the upper swing structure 4 by being supplied with power and the function of a generator (swing regeneration function) to convert, into electric energy, kinetic energy (rotation energy) resulting from deceleration of swinging of the upper swing structure 4 (regenerative power generation).

In addition to the assist power generation motor 10, the driving battery 19, and the swing electric motor 22, the electric system of the hydraulic excavator 1 configured as described above includes a first inverter 24, a motor generator control unit 24A (hereinafter referred to as the MGCU 24A), a second inverter 25, a swing electric motor control unit 25A (hereinafter referred to the RMCU 25A), a chopper 26, a chopper control unit 26A (hereinafter referred to as the CCU 26A), the driving battery 19, and a battery control unit 19A (hereinafter referred to as the ECU 19A). Here, the first inverter 24, the MGCU 24A, the second inverter 25, the RMCU 25A, the chopper 26, the CCU 26A, the driving battery 19, and the ECU 19A form a power conversion device (PCU: power control unit) 23. The power conversion device 23 is mounted in the upper swing structure 4.

The power conversion device 23 controls power supplied to the assist power generation motor 10 and the swing electric motor 22 and power generated by the assist power generation motor 10 and the swing electric motor 22. The assist power generation motor 10 and the swing electric motor 22 function as electric motors by power supplied from the power conversion device 23, and also function as generators to supply power to the power conversion device 23.

Additionally, the power conversion device 23 forms the electric or electronic facility 70 in conjunction with the main controller 28, the engine 9, the ECU 9A, a power source controller 42 for the electric or electronic facility, and an electric load 44. In the electric or electronic facility 70, the main controller 28, the ECU 9A, the ECU 29A, the MGCU 24A, the RMCU 25A, CCU 26A, and the electric load 44 are operated by power supplied from the capacitor 40 via the power source controller 42 for the electric or electronic facility. The power source controller 42 for the electric or electronic facility controls supply of power from the capacitor 40 to components of the electric or electronic facility 70 and stop (interruption) of the power supply on the basis of a control command from the main controller 28. Note that electric load 44 collectively represents other components operated by the power supplied from the capacitor 40 (that is, other components consuming the power) and may be, for example, a compressor of an air conditioner and an interior light.

A first inverter 24 is electrically connected to the assist power generation motor 10 to control driving of the assist power generation motor 10. Specifically, the first inverter 24 is configured using a plurality of (for example, six) switching elements including, for example, transistors or insulated gate bipolar transistors (IGBTs) and is connected to a pair of DC buses 27A and 27B. Opening and closing operations of the switching elements of the first inverter 24 are controlled by three-phase (U phase, V phase, and W phase) PWM signals output from the MGCU 24A. When the assist power generation motor 10 generates power, the first inverter 24 converts power generated by the assist power generation motor 10 into DC power and supplies the DC power to the DC buses 27A and 27B. On the other hand, when the assist power generation motor 10 is driven, the first inverter 24 generates three-phase AC power from DC power from the DC buses 27A and 27B and supplies the AC power to the assist power generation motor 10.

A second inverter 25 is electrically connected to the swing electric motor 22 to control driving of the swing electric motor 22. Specifically, like the first inverter 24, the second inverter 25 is configured using a plurality of (for example, six) switching elements, and is connected to the pair of DC buses 27A and 27B. Opening and closing operations of the switching elements of the second inverter 25 are controlled by three-phase PWM signals output from the RMCU 25A. When the swing electric motor 22 drives swinging, the second inverter 25 generates three-phase AC power from DC power from the DC buses 27A and 27B and supplies the AC power to the swing electric motor 22. On the other hand, when the swing electric motor 22 decelerates swinging (power regeneration), the second inverter 25 converts regenerative power from the swing electric motor 22 into DC power and supplies the DC power to the DC buses 27A and 27B.

The chopper 26 is disposed to connect the driving battery 19 to the DC buses 27A and 27B. That is, the chopper 26 and the first and second inverters 24 and 25 are electrically connected together via the pair of DC buses 27A and 27B. The chopper 26 includes, for example, a plurality of (for example, two) switching elements including IGBTs and a reactor. In the chopper 26, opening and closing operations of the switching elements are controlled by the CCU 26A. The chopper 26 functions as a step-down circuit (step-down chopper) when the driving battery 19 is charged, and reduces the DC voltage supplied from the DC buses 27A and 27B and supplies the reduced voltage to the driving battery 19. On the other hand, the chopper 26 functions as a booster circuit (booster chopper) when the driving battery 19 is discharged and boosts the DC power supplied from the driving battery 19 and supplies the boosted voltage to the DC buses 27A and 27B.

The first and second inverters 24 and 25 are each connected to the chopper 26 on an anode side (plus side) and on a cathode side (minus side) through the pair of DC buses 27A and 27B. The DC buses 27A and 27B connect to a smoothing capacitor (not illustrated) to stabilize the voltages of the DC buses 27A and 27B. For example, a predetermined DC voltage of approximately several hundred V is applied to the DC buses 27A and 27B.

Power generated in a case where the assist power generation motor 10 functions as a generator is supplied to the second inverter 25 and the chopper 26 via the first inverter 24 and used to drive the swing electric motor 22 or to charge the driving battery 19 (power storage). Additionally, in a case where the assist power generation motor 10 functions as an electric motor assisting in driving the engine 9, the power charged in the driving battery 19 or the regenerative power from the swing electric motor 22 is used to drive the assist power generation motor 10.

Power (regenerative power) generated in a case where the swing electric motor 22 functions as a generator is supplied to the first inverter 24 and the chopper 26 via the second inverter 25 and the DC buses 27A and 27B and used to drive the assist power generation motor 10 or to charge the driving battery 19 (power storage). Additionally, in a case where the swing electric motor 22 functions as an electric motor assisting driving of the swing hydraulic motor 21, the generated power generated by the assist power generation motor 10 or the power supplied from the driving battery 19 is used to drive the swing electric motor 22.

The driving battery 19 is disposed on the swing frame 6 and electrically connected to the assist power generation motor 10 via the chopper 26 and the first inverter 24 and also electrically connected to the swing electric motor 22 via the chopper 26 and the second inverter 25. The driving battery 19 stores power and includes, for example, a secondary battery such as a lithium ion battery or a nickel hydrogen battery or an electric double-layer capacitor. The driving battery 19 is charged with the power generated by the assist power generation motor 10 and the power (regenerative power) generated when the swing electric motor 22 decelerates swinging (power storage) and discharges (supplies) the charged power to the assist power generation motor 10 and the swing electric motor 22.

The driving battery 19 includes a ECU 19A controlling a charging operation and a discharge operation of the driving battery 19 on the basis of commands from the main controller 28. The ECU 19A forms a power remaining amount sensing means and senses a state of charge (SOC) as a remaining amount of power in the driving battery 19 and outputs the SOC to the main controller 28.

The main controller 28 is disposed, for example, in the cab 7 and connected to the ECU 9A, the ECU 19A, the MGCU 24A, the RMCU 25A, and the CCU 26A. The main controller 28 acquires information from and controls operations of the ECU 9A, the BCU 19A, the MGCU 24A, the RMCU 25A, and the CCU 26A to control operations of the engine 9, the driving battery 19, the chopper 26, the first inverter 24, and the second inverter 25. The main controller 28 acquires, for example, information such as an engine speed from the ECU 9A and information such as the state of charge (SOC) of the driving battery 19 from the ECU 19A. The main controller 28 includes, for example, a microcomputer and the like.

As illustrated in FIG. 3, the main controller 28 includes an electric control processing section 281, an engine control processing section 282, a power source control processing section for an electric facility (power source control processing section) 283.

The electric control processing section 281 generates control commands for the BCU 19A, the MGCU 24A, the RMCU 25A, the CCU 26A, and the like to control driving of the assist power generation motor 10 and the swing electric motor 22. The electric control processing section 281 includes an assist power generation motor control section 281a controlling driving of the assist power generation motor 10 and a swing electric motor control section 281b controlling driving of the swing electric motor 22.

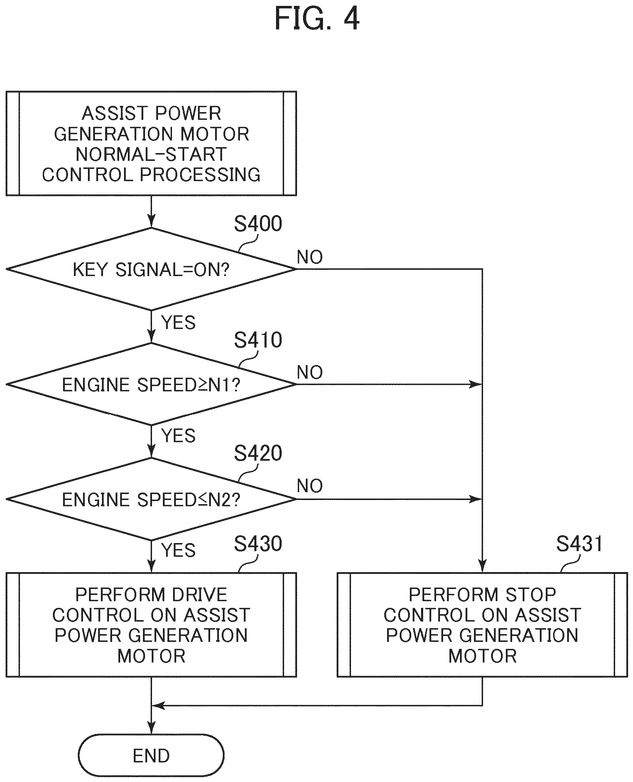

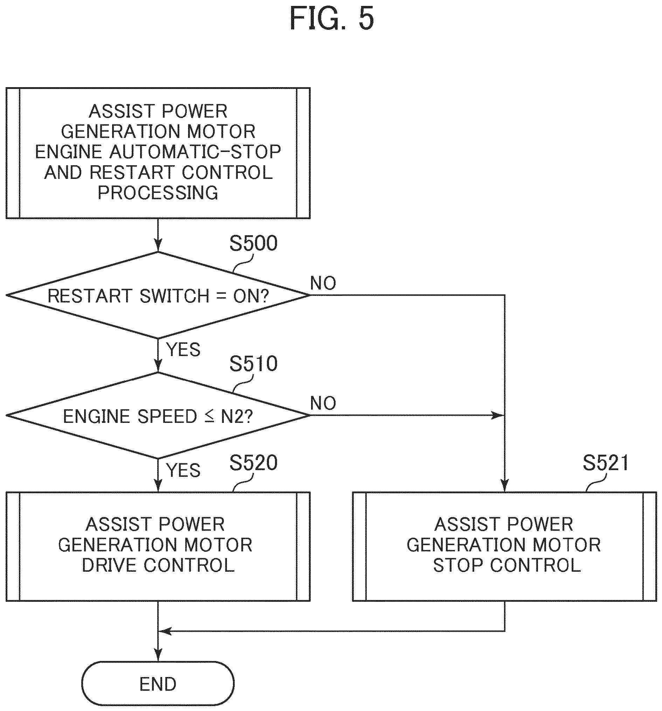

FIG. 4 is a flowchart illustrating assist power generation motor normal-start control processing executed by the assist power generation motor control section. FIG. 5 is a flowchart illustrating assist power generation motor engine automatic-stop and restart control processing.

In FIG. 4, the assist power generation motor control section 281a determines whether or not a key signal has been set to indicate ON, that is, whether or not the key switch 29 has been set in an ON position (step S400). In a case where the result of the determination is YES, the assist power generation motor control section 281a determines whether or not the engine speed is equal to or higher than N1 and whether or not the engine speed is equal to or lower than N2 (steps S410 and S420). In a case where the results of the determinations in steps S400 to S420 are all YES, the assist power generation motor control section 281a performs assist power generation motor drive control (step S430) and ends the processing. Otherwise (that is, in a case where at least one of the results of the determinations in steps S400 to S420 is NO), the assist power generation motor control section 281a performs assist power generation motor stop control (step S431) and ends the processing.

Here, the engine speed N1 is a reference value for determining whether or not the engine 9 is stopped, and in a case where the engine speed is lower than N1, the engine 9 is assumed to be in a stopped state. Additionally, the engine speed N2 is a reference value for determining whether or not the engine 9 is in an operative state, and in a case where the engine speed is higher than N2, the engine 9 is assumed to be in the operative state. Additionally, in a case where the engine speed is equal to or higher than N1 and equal to or lower than N2, the engine 9 can be assumed to be in an intermediate state between the stopped state and the operative state. The assist power generation motor drive control (S430) is control in which the assist power generation motor 10 is used to start the engine 9 (or assist in starting the engine 9). The assist power generation motor stop control (S431) is control in which the assist power generation motor 10 is used to assist in starting the engine 9. That is, in the assist power generation motor normal-start control processing, the assist power generation motor 10 assists operations of the starter 43 during initial start of the engine 9.

In FIG. 5, the assist power generation motor control section 281a determines whether or not the restart switch 60 has been subjected to an ON operation (has been depressed) (step S500). In a case where the result of the determination is YES, the assist power generation motor control section 281a determines whether or not the engine speed is equal to or lower than N2, that is, whether or not the engine 9 is in an inoperative state (step S510). In a case where the results of the determinations in steps S500 and S510 are both YES, that is, the restart switch 60 has been operated and the engine 9 is not in the operative state, the assist power generation motor control section 281a performs the assist power generation motor drive control (step S520) and ends the processing. Otherwise (that is, in a case where at least one of the results of the determinations in steps S500 and S510 is NO), the assist power generation motor control section 281a performs the assist power generation motor stop control (step S521) and ends the processing. That is, in the assist power generation motor control automatic-stop and restart control processing, the assist power generation motor 10 restarts the engine 9.

The engine control processing section 282 generates control commands for the ECU 9A and the like to control driving of the engine 9, and includes an automatic-stop processing section 282b performing what is called automatic stop control that stops the engine 9 in a case where a preset automatic stop condition is satisfied, and an initial-operation determination processing section 282a determining, in a case where the engine 9 has been started, whether or not initial start or restart has been performed. Here, the initial start of the engine 9 refers to starting of the engine 9 performed in a state where the key switch 29 is set in an OFF position (that is, in a state where the engine 9 is stopped and power supply from the capacitor 40 to the electric or electronic facility 70 is stopped). Additionally, restart of the engine 9 refers to starting of the engine 9 performed by the assist power generation motor 10 on the basis of operation (depression) of the restart switch 60 in a state where the engine 9 is in the stopped state under the automatic stop control.

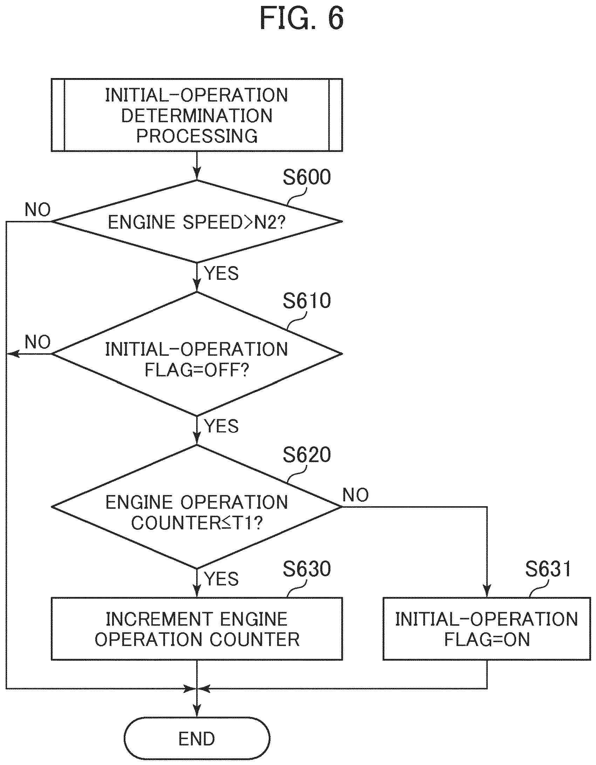

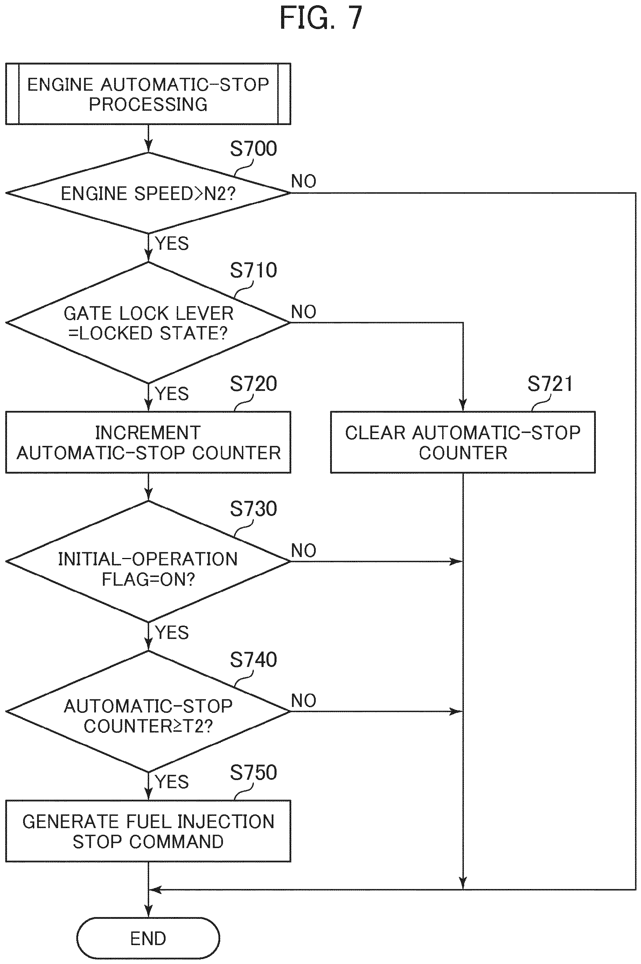

FIG. 6 is a flowchart illustrating initial-operation determination processing executed by the initial-operation determination processing section. FIG. 7 is a flowchart illustrating engine automatic-stop processing executed by the automatic-stop processing section.

In FIG. 6, the initial-operation determination processing section 282a determines whether or not the engine speed is higher than N2 (step S600). In a case where the result of the determination is YES, the initial-operation determination processing section 282a determines whether or not an initial-operation flag is OFF (step S610). In a case where the results of the determinations in steps 600 and S610 are YES, the initial-operation determination processing section 282a determines whether or not an engine operation counter has a value equal to or smaller than a preset threshold T1 (step S620). Otherwise (that is, in a case where at least one of the results of the determinations in steps S600 and S610 is NO), the initial-operation determination processing section 282a ends the processing. In a case where the result of the determination in step S620 is YES, the initial-operation determination processing section 282a increments the engine operation counter (that is, adds one to the value of the counter) (step S630), and ends the processing. In a case where the result of the determination is NO, the initial-operation determination processing section 282a turns ON an initial-operation flag (step S631) and ends the processing. The initial-operation determination processing is processing in which the initial-operation flag is kept OFF until a given time has elapsed since the initial start of the engine 9 (here, the time required for the engine operation counter to reach T1), and is turned ON when the value of the engine operation counter reaches T1. The initial-operation determination processing is, for example, repeatedly executed on the basis of a clock signal used by the main controller 28.

In FIG. 7, the automatic-stop processing section 282b determines whether or not the engine speed is higher than N2 (step S700), and ends the processing in a case where the result of the determination is NO, that is, in a case where the engine 9 is not in the operative state. Additionally, in a case where the result of the determination in step S700 is YES, that is, in a case where the engine 9 is determined to be in the operative state, the automatic-stop processing section 282b determines whether or not the gate lock lever 17 is in a locked sate (step S710). In a case where the result of the determination is YES, the automatic-stop processing section 282b increments an automatic-stop counter (that is, adds one to the value of the automatic-stop counter) (step S720). Subsequently, the automatic-stop processing section 282b determines whether or not the initial-operation flag is ON and whether or not the automatic-stop counter has a value equal to or larger than a preset threshold T2 (steps S730 and S740). In a case where the results of the determinations in steps S730 and S740 are both YES, the initial-operation determination processing section 282a generates a fuel injection stop command that is a command directed to the ECU 9A to stop fuel injection in the engine 9 to stop the engine 9 (S750) and ends the processing. Otherwise (that is, in a case where at least one of the results of the determinations in steps S730 and S740 is NO) the initial-operation determination processing section 282a ends the processing. Additionally, in a case where the result of the determination in step S710 is NO, that is, in a case where the automatic-stop processing section 282b determines that the gate lock lever 17 is in a canceled state, the automatic-stop processing section 282b clears the automatic-stop counter (step S721) and ends the processing.

The engine automatic-stop processing is processing of performing what is called automatic stop control; after the elapse of the time from the initial start of the engine 9 until the value of the engine operation counter reaches T1, when a given time (here, the time required for the value for the automatic-stop counter to reach T2) has elapsed since the start (initial start or restart) of the engine 9, the engine 9 is stopped. The engine automatic-stop processing is, for example, repeatedly executed on the basis of a clock signal used by the main controller 28. That is, in the engine automatic-stop processing, the engine 9 is not automatically stopped until a sufficient time set by the threshold T1 has elapsed since the initial start of the engine 9. Note that automatic-stop condition includes the time from the initial start until the value of the engine operation counter reaches T1 (first continuous-operation time condition) and the time from restart until the value of the engine operation counter reaches T2 (second continuous-operation time condition) and that the first continuous-operation time condition is set to involve a longer time than the second continuous-operation time condition.

The power source control processing section for the electric facility (power source control processing section) 283 controls the power source controller 42 for the electric or electronic facility to control the supply of power from the capacitor 40 to the components of the electric or electronic facility 70 and the stop (interruption) of the power supply. The power source control processing section for the electric facility (power source control processing section) 283 includes a charge amount estimation processing section 283a estimating a charge amount by which the capacitor 40 is charged by the alternator (generator) 41 while the engine 9 is in operation, an electric discharge amount estimation processing section 283b estimating an electric discharge amount corresponding to power supplied from the capacitor 40 to the electric or electronic facility 70 while the engine 9 is stopped under the automatic stop control, and a power supply determination processing section 283c stopping the supply of power from the capacitor 40 to the electric or electronic facility 70 in a case where the electric discharge amount is equal to or larger than the charge amount (that is, when the electric discharge amount is determined to exceed the charge amount) while the engine 9 is stopped under the automatic stop control.

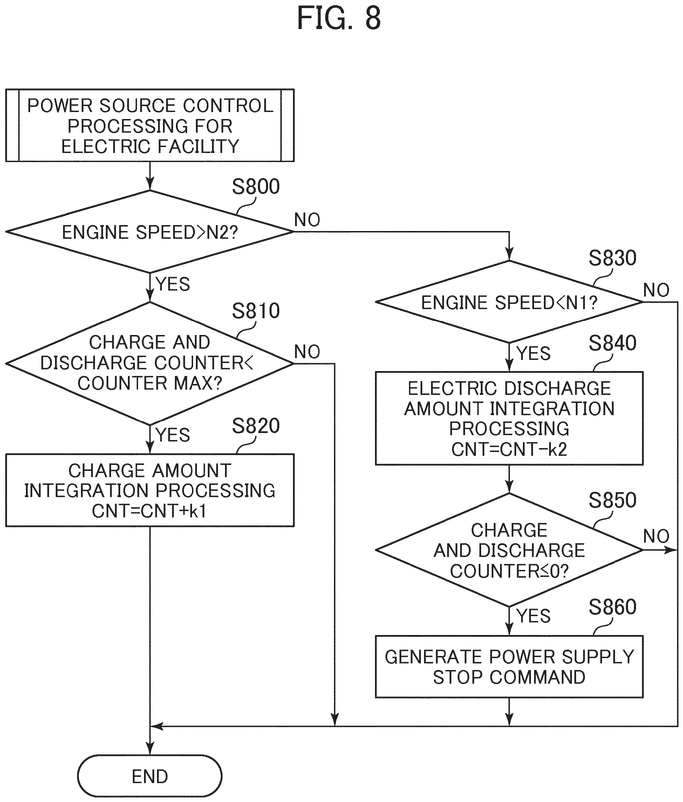

FIG. 8 is a flowchart illustrating power source control processing for the electric facility in the power source control processing section for the electric facility.

In FIG. 8, the power source control processing section 283 for the electric facility determines whether or not the engine speed of the engine 9 is higher than N2, that is, whether or not the engine 9 is in operation (step S800).

In a case where the result of the determination in step S800 is YES, the charge amount estimation processing section 283a determines whether or not a value of a charge and discharge counter is smaller than a count MAX (step S810). In a case where the result of the determination is YES, the charge amount estimation processing section 283a executes charge amount integration processing to input CNT + k1 to the charge and discharge counter CNT, which is an estimated value of power stored in the capacitor 40 (step S820), and ends the processing. The charge amount estimation processing section 283a also ends the processing in a case where the result of the determination in step S810 is NO.

Additionally, in a case where the result of the determination in step S800 is NO, the charge amount estimation processing section 283a determines whether or not the engine speed is lower than N1, that is, whether or not the engine 9 is stopped (step S830). In a case where the result of the determination is YES, the charge amount estimation processing section 283a executes electric discharge amount integration processing to input CNT - k2 to the charge and discharge counter CNT (step S840). Subsequently, the power supply determination processing section 283c determines whether or not the value of the charge and discharge counter is equal to or smaller than 0 (zero) (step S850). In a case where the result of the determination is YES, the power supply determination processing section 283c generates a power supply stop command to cause the power source controller 42 for the electric facility to stop the supply of power from the capacitor 40 to the electric or electronic facility 70 (step S860) and ends the processing. Additionally, in a case where the result of the determination in step S830 or S850 is NO, the power supply determination processing section 283c ends the processing.

Here, the charge and discharge counter CNT will be described. The charge and discharge counter is the estimated value of power stored in the capacitor 40, and the counter MAX is indicative of the maximum capacitance of the capacitor 40. Additionally, the charge and discharge counter CNT, a capacitance at which degradation of the capacitor 40 is sufficiently suppressed is set as a reference for the minimum value of the capacitance of the capacitor 40 (that is, the charge and discharge counter = zero). Additionally, a constant k1 is indicative of the estimated value of the amount of power generated, during a unit time (in this case, one cycle of power source control processing for the electric facility), by the alternator 41 while the engine 9 is in operation. The constant k1 is set equal to, for example, a rated power generation amount of the alternator 41 or an experimentally determined power generation amount. Additionally, a constant k2 is indicative of the estimated value of the amount of power consumed, during a unit time (also in this case, one cycle of power source control processing for the electric facility), by the electric or electronic facility 70 (in other words, the electric discharge amount of the capacitor 40) while the engine 9 is stopped under the automatic stop control. The constant k2 is set equal to, for example, an electric discharge amount determined from the specifications of components of the electric or electronic facility 70 or an experimentally determined electric discharge amount. Note that, in the flowchart in FIG. 8, for example, the result of the determination in step S830 being YES, that is, the engine 9 being stopped, indicates that the engine 9 is stopped under the automatic stop control. For example, in a case where the engine 9 is stopped by setting the key switch 29 in the OFF position, no power is supplied to the electric or electronic facility 70, and the power source control processing for the electric facility is originally not executed.

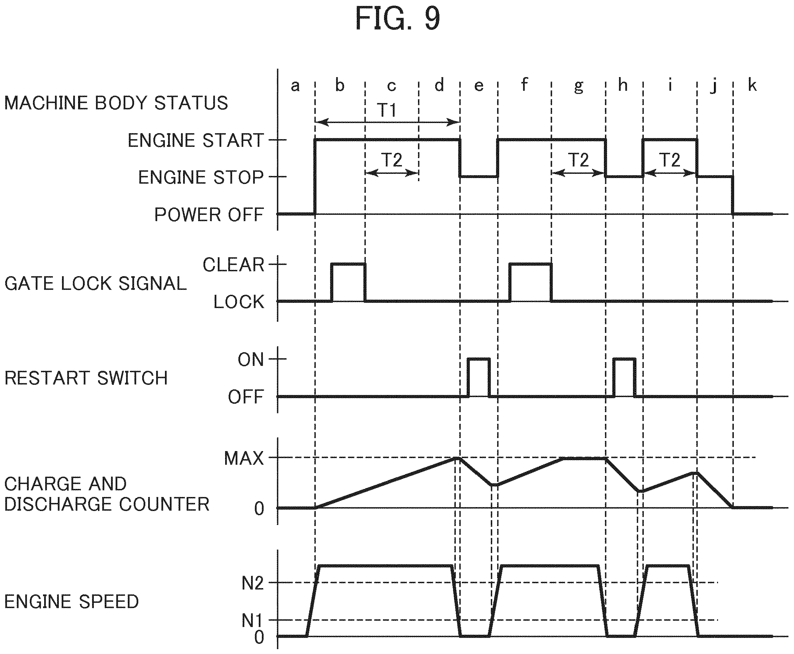

Operations of the present embodiment configured as described above will be described with reference to FIG. 9.

FIG. 9 is a diagram illustrating an example of temporal changes in the charge and discharge counter along with temporal changes in other statuses including a machine body status.

In FIG. 9, for simplification of description, time T1 denotes the time required for the value of the engine operation counter to reach T1, and time T2 denotes the time required for the value of the automatic-stop counter to reach T2. In FIG. 9, first, in a case where the engine 9 is initially started, the machine body status transitions from a stopped state (interval a) to an engine operative state (interval b) . In the engine operative state, the gate lock lever 17 is operated to switch the gate lock signal from the canceled state to the locked state (interval c), and when the time T2 has elapsed, engine stop conditions are satisfied. However, the engine 9 has been initially started and is thus not automatically stopped. Additionally, it is not until the time T1 has elapsed since the initial start (interval d) that the engine 9 is stopped under the automatic stop control. In the interval b, the interval c, and the interval d in which the engine 9 is in operation, the value of the charge and discharge counter CNT increases at a gradient k1 on the basis of charge amount integration processing. In an interval e, the engine 9 is automatically stopped and is brought into a standby state, and the value of the charge and discharge counter CNT decreases at a gradient k2 on the basis of charge amount integration processing. While the engine 9 is automatically stopped under the automatic stop control, turning ON (depressing) the restart switch 60 restarts the engine 9, and the machine body status transitions to the engine operative state (interval f). After the engine is restarted, the gate lock lever 17 is operated to switch the gate lock signal from the canceled state to the locked state. Then, when the time T2 has elapsed (interval g), the engine 9 transitions again to the state where the engine 9 is automatically stopped under the automatic stop control (interval h). Subsequently, the engine 9 is restarted again, and when the time T2 has elapsed with the gate lock signal locked (interval i), the engine 9 transitions again to the state where the engine 9 is automatically stopped under the automatic stop control (interval j). In the interval j, in a case where the restart switch 60 is not operated (depressed) until the value of the charge and discharge counter reaches zero, the supply of power from the capacitor 40 to the electric or electronic facility 70 is stopped (interrupted), with the machine body status set to power OFF.

Now, features of the embodiments will be described below.
(1) In the above-described embodiments, a construction machine is provided that includes an engine 9, a generator (for example, an alternator 41) driven by the engine, a capacitor 40 storing power generated by the generator, an electric or electronic facility 70 driven or controlled by power supplied from the capacitor, and a controller (for example, main controller 28) performing automatic stop control to stop the engine in a case where a preset automatic stop condition is satisfied, the controller including a power source control processing section 283 controlling power supplied from the capacitor to the electric or electronic facility, the power source control processing section including a charge amount estimation processing section 283a estimating a charge amount by which the capacitor is charged by the generator while the engine is in operation, an electric discharge amount estimation processing section 283b estimating an electric discharge amount corresponding to power supplied from the capacitor to the electric or electronic facility while the engine is stopped under the automatic stop control, and a power supply determination processing section 283c stopping supply of power from the capacitor to the electric or electronic facility in a case where the engine is stopped under the automatic stop control and the electric discharge amount is determined to be larger than the charge amount.
   This allows reliable suppression of degradation of the capacitor while the engine is under the automatic stop control.
(2) Additionally, in the above-described embodiments, in the construction machine (1), the charge amount estimation processing section estimates the charge amount by which the capacitor is charged by the generator on a basis of a preset constant k1 indicating a relationship between an operation time of the engine and the charge amount of the capacitor, and the electric discharge amount estimation processing section estimates the electric discharge amount corresponding to the power supplied from the capacitor to the electric or electronic facility on a basis of a preset constant k2 indicating a relationship between a stop time of the engine under the automatic stop control and the electric discharge amount of the electric or electronic facility.
   Thus, as a result, the time from the automatic stop of the engine 9 until power-off in a case where the restart switch 60 is not operated varies according to the power supplied from the capacitor 40 to the electric or electronic facility 70, that is, the estimated electric discharge amount.
(3) Additionally, in the above-described embodiments, in the construction machine (1), the automatic stop condition for the automatic stop control includes at least a first continuous-operation time condition and a second continuous-operation time condition both indicating a time for which the engine has operated since starting, and the first continuous-operation time condition for initial start that is starting performed in a case where supply of power from the capacitor to the electric or electronic facility is stopped is set to involve a longer time than the second continuous-operation time condition for restart that is starting performed in a case where the engine is stopped under the automatic stop control.

### Description of Reference Characters

1: Hydraulic excavator
2: Lower travel structure
2A: Truck frame
2B: Drive wheel
2C: Idle wheel
2D: Crawler
2E, 2F: Traveling hydraulic motor
3: Swing bearing device
4: Upper swing structure
5: Work device
5A: Boom
5B: Arm
5C: bucket
5D: Boom cylinder
5E: Arm cylinder
5F: Bucket cylinder
6: Swing frame
7: Cab
8: Counterweight
9: Engine
9A: Engine control unit
10: Assist power generation motor
11: Hydraulic pump
12: Pilot pump
13: Hydraulic working fluid tank
14: Operation device
15: Flow control valve
16: Control valve
17: Gate lock lever
18: Pilot cut valve
19: Driving battery
19A: Battery control unit
20: Speed reducer
20A: Swing device
21: Swing hydraulic motor
22: Swing electric motor
23: Power conversion device
24: First inverter
24A: Motor generator control unit
25: Second inverter
25A: Swing electric motor control unit
26: Chopper
26A: Chopper control unit
27A: DC bus
27B: DC bus
28: Main controller
29: Key switch
30: Display device
40: Capacitor
41: Alternator
42: Power source controller for the electric facility
43: Starter
44: Electric load
60: Restart switch
281: Electric control processing section
281a: Assist power generation motor control section
281b: Swing electric motor control section
282: Engine control processing section
282a: Initial-operation determination processing section
282b: Automatic stop processing section
283: Power source control processing section for electric facility
283a: Charge amount estimation processing section
283b: Electric discharge amount estimation processing section
283c: Power supply determination processing section

## Claims

1. A construction machine comprising:
an engine (9);
a generator driven by the engine (9);
a capacitor (40) storing power generated by the generator;
an electric or electronic facility driven or controlled by power supplied from the capacitor (40); and
a controller performing automatic stop control to stop the engine (9) in a case where a preset automatic stop condition is satisfied,
the construction machine **characterized in that**
the controller controlling power supplied from the capacitor (40) to the electric or electronic facility, estimating a charge amount by which the capacitor (40) is charged by the generator while the engine (9) is in operation, estimating an electric discharge amount corresponding to power supplied from the capacitor (40) to the electric or electronic facility while the engine (9) is stopped under the automatic stop control, and stopping supply of power from the capacitor (40) to the electric or electronic facility in a case where the engine (9) is stopped under the automatic stop control and the electric discharge amount is determined to be larger than the charge amount, wherein
the controller estimates the charge amount by which the capacitor (40) is charged by the generator on a basis of a preset constant indicating a relationship between an operation time of the engine (9) and the charge amount of the capacitor (40), and estimates the electric discharge amount corresponding to power supplied from the capacitor (40) to the electric or electronic facility on a basis of a preset constant indicating a relationship between a stop time of the engine (9) under the automatic stop control and the electric discharge amount of the electric or electronic facility.

2. The construction machine according to claim 1, wherein
the automatic stop condition for the automatic stop control includes at least a first continuous-operation time condition and a second continuous-operation time condition both indicating a time for which the engine (9) has operated since starting, and
the first continuous-operation time condition for initial start that is starting performed in a state where the engine (9) is stopped and where supply of power from the capacitor (40) to the electric or electronic facility is stopped is set to involve a longer time than the second continuous-operation time condition for restart that is starting performed in a state where the engine (9) is stopped under the automatic stop control.

## Patentansprüche

1. Baumaschine, die Folgendes umfasst:
eine Kraftmaschine (9);
einen Generator, der von der Kraftmaschine (9) angetrieben wird;
einen Kondensator (40), der die von dem Generator erzeugte Energie speichert;
eine elektrische oder elektronische Einrichtung, die durch die Energie, die von dem Kondensator (40) geliefert wird, angetrieben oder gesteuert wird; und
eine Steuereinrichtung, die eine automatische Stoppsteuerung durchführt, um in einem Fall, in dem eine vorher eingestellte Stoppbedingung erfüllt ist, die Kraftmaschine (9) anzuhalten,
wobei die Baumaschine **dadurch gekennzeichnet ist, dass**
die Steuereinrichtung, die die Energie, die von dem Kondensator (40) zu der elektrischen oder elektronischen Einrichtung geliefert wird, steuert, eine Ladungsmenge schätzt, mit der der Kondensator (40) durch den Generator aufgeladen wird, während die Kraftmaschine (9) in Betrieb ist, eine elektrische Entladungsmenge schätzt, die der Energie, die der elektrischen oder elektronischen Einrichtung von dem Kondensator (40) zugeführt wird, entspricht, während die Kraftmaschine (9) unter der automatischen Stoppsteuerung angehalten wird, und die Energiezufuhr von dem Kondensator (40) zu der elektrischen oder elektronischen Einrichtung dann stoppt, wenn die Kraftmaschine (9) unter der automatischen Stoppsteuerung angehalten worden ist und es bestimmt worden ist, dass die elektrische Entladungsmenge größer ist als die Ladungsmenge, wobei
die Steuereinrichtung die Ladungsmenge, mit der der Kondensator (40) von dem Generator aufgeladen wird, auf der Grundlage einer voreingestellten Konstanten, die eine Beziehung zwischen einer Betriebszeit der Kraftmaschine (9) und der Ladungsmenge des Kondensators (40) anzeigt, schätzt, und die elektrische Entladungsmenge, die der Energie entspricht, die der elektrischen oder elektronischen Einrichtung von dem Kondensator zugeführt wird, auf der Grundlage einer voreingestellten Konstanten, die eine Beziehung zwischen einer Stoppzeit der Kraftmaschine (9) unter der automatischen Stoppsteuerung und der elektrischen Entladungsmenge der elektrischen oder elektronischen Einrichtung anzeigt, schätzt.

2. Baumaschine nach Anspruch 1, wobei
die automatische Stoppbedingung für die automatische Stoppsteuerung zumindest eine erste Dauerbetriebszeitbedingung und eine zweite Dauerbetriebszeitbedingung enthält, die beide eine Zeit anzeigen, die die Kraftmaschine (9) seit dem Start in Betrieb war, und
die erste Dauerbetriebszeitbedingung für den Erststart, d. h. einem Starten, das in einem Zustand durchgeführt worden ist, in dem die Kraftmaschine (9) angehalten ist, und in dem die Energiezufuhr von dem Kondensator (40) zu der elektrischen oder elektronischen Einrichtung angehalten ist, eingestellt ist, um eine längere Zeit als die zweite Dauerbetriebszeitbedingung für den Neustart, d. h. einem Starten, das in einem Zustand durchgeführt wird, in dem die Kraftmaschine (9) unter der automatischen Stoppsteuerung angehalten worden ist, zu umfassen.

## Revendications

1. Machine de chantier comprenant :
un moteur (9) ;
un générateur entraîné par le moteur (9) ;
un condensateur (40) qui stocke une puissance générée par le générateur ;
un équipement électrique ou électronique entraîné ou commandé par une puissance alimentée depuis le condensateur (40) ; et
un contrôleur qui effectue une commande d'arrêt automatique pour arrêter le moteur (9) dans un cas où une condition d'arrêt automatique prédéfinie est satisfaite,
la machine de chantier étant **caractérisée en ce que**
le contrôleur commande une puissance alimentée depuis le condensateur (40) jusqu'à l'équipement électrique ou électronique, estime une amplitude de charge à raison de laquelle le condensateur (40) est chargé par le générateur tandis que le moteur (9) est en fonctionnement, estime une amplitude de décharge électrique correspondant à une puissance alimentée depuis le condensateur (40) jusqu'à l'équipement électrique ou électronique tandis que le moteur (9) est arrêté sous la commande d'arrêt automatique, et arrête une alimentation de puissance depuis le condensateur (40) jusqu'à l'équipement électrique ou électronique dans un cas où le moteur (9) est arrêté sous la commande d'arrêt automatique et où l'amplitude de décharge électrique est déterminée comme étant plus grande que l'amplitude de charge, dans laquelle
le contrôleur estime l'amplitude de charge à raison de laquelle le condensateur (40) est chargé par le générateur sur une base d'une constante prédéfinie qui indique une relation entre un temps de fonctionnement du moteur (9) et l'amplitude de charge du condensateur (40), et estime l'amplitude de décharge électrique correspondant à une puissance alimentée depuis le condensateur (40) jusqu'à l'équipement électrique ou électronique sur une base d'une constante prédéfinie qui indique une relation entre un temps d'arrêt du moteur (9) sous la commande d'arrêt automatique et l'amplitude de décharge électrique de l'équipement électrique ou électronique.

2. Machine de chantier selon la revendication 1, dans laquelle
la condition d'arrêt automatique pour la commande d'arrêt automatique inclut au moins une première condition de temps de fonctionnement en continu et une seconde condition de temps de fonctionnement en continu qui indiquent toutes les deux un laps de temps pendant laquelle le moteur (9) a fonctionné depuis qu'il a démarré, et
la première condition de temps de fonctionnement en continu pour un démarrage initial qui démarre en étant effectué dans un état dans lequel le moteur (9) est arrêté et où une alimentation de puissance depuis le condensateur (40) jusqu'à l'équipement électrique ou électronique est arrêtée est définie pour impliquer un temps plus long que la seconde condition de temps de fonctionnement en continu pour un redémarrage qui démarre en étant effectué dans un état dans lequel le moteur (9) est arrêté sous la commande d'arrêt automatique.
